(19) Europäisches Patentamt
European Patent Office
Office européen des brevets

(11) Publication number: 0 432 756 A1

(12) **EUROPEAN PATENT APPLICATION**

(21) Application number: **90123950.9**

(22) Date of filing: **12.12.90**

(51) Int. Cl.5 **C08L 77/00**, C08L 51/04, C08L 55/02, //(C08L77/00,51:04, 57:10),(C08L77/00,55:02,57:10), (C08L51/04,77:00,57:10), (C08L55/02,77:00,57:10)

(30) Priority: **13.12.89 IT 2267989**

(43) Date of publication of application: **19.06.91 Bulletin 91/25**

(84) Designated Contracting States: **AT BE CH DE DK ES FR GB LI NL SE**

(71) Applicant: **MONTEDIPE S.r.l.**
**16, Piazza della Repubblica**
**I-20121 Milano(IT)**

(72) Inventor: **Fasulo, Gian Claudio, Dr.**
**11, Via Puccini**
**I-46010 S.Silvestro di Curtatone Mantova(IT)**
Inventor: **Ghidoni, Dario, Dr.**
**1, Via 25 Aprile**
**I-46023 Gonzaga, Mantova(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

(54) **Thermoplastic compositions based on a vinylaromatic copolymer and a polyamide resin.**

(57) Disclosed are thermoplastic compositions having improved mechanical characteristics, stiffness and thermoresistance, comprising a blend of:

(A) an impact-resistant vinyl-aromatic copolymer comprising a vinyl-aromatic monomer and an ethylenically unsaturated nitrile wherein the monomers have been polymerized in the presence of and grafted onto a rubber substrate having a glass transition temperature (Tg) lower than 0° C;

(B) a polyamide resin;

(C) a compatibilizing polymer comprising at least one copolymerized monomer containing a functional group reactive with the polyamide resin, said monomer being present in an amount substantially equal to that of the ethylenically unsaturated nitrile of the copolymer of component (A).

EP 0 432 756 A1

## THERMOPLASTIC COMPOSITIONS BASED ON A VINYLAROMATIC COPOLYMER AND A POLYAMIDE RESIN

The present invention relates to thermoplastic compositions based on impact-resistant vinyl-aromatic copolymer and polyamide.

More particularly, the present invention relates to thermoplastic compositions based on an impact resistant styrenic copolymer and a polyamide, having improved mechanical properties, stiffness and thermo-resistance and being particularly suitable for injection molding and thermoforming.

As is known, thermoplastic polyamides exhibit a good elongation at break, high energy absorbtion, especially in ball drop tests, and a very good thermo-resistance. The high notch sensitivity, the crack propagation and the high water absorbtion constitute, however, significant limitations for the use of these resins in the production of shaped articles.

Moreover, the polyamides are poorly compatible with other polymers such as, for example, the impact-resistant vinyl-aromatic copolymers; therefore, the interfaces between the domains of the blend components represent weak areas along which the breaking of the material takes place. In order to make polyamides compatible with impact-resistant vinyl-aromatic copolymers, it has been proposed, in DE-A-3,120,803, to use a compatibilizer composed of a styrene copolymer containing from 2 to 50% by weight of carboxylic acid and/or anhydride reactive groups. The compatibilizing copolymer described in said DE-A had a molecular weight of from 500 to 20,000; in particular 500 to 7,000, preferably 800 to 2,000. The thus obtained mixtures show improved impact strength (IZOD) properties which, however, are not completely satisfactory for several applications.

According to EP-A-202214, the impact strength of polyamide compositions can be improved by preparing a blend comprising:

a) 5 to 79.5% by weight of a composition grafted onto rubber consisting of a grafted copolymer containing 15-85% by weight of at least one monomer selected from $C_1$-$C_4$ alkyl methacrylates, $C_1$-$C_4$ alkyl acrylates, methacrylonitrile and acrylonitrile and 85-15% by weight of a vinyl-aromatic monomer, wherein the monomers have been polymerized in the presence of and grafted onto a rubber substrate having a glass transition temperature below $0^\circ$ C, and wherein the amount of rubber is from 5 to 80% by weight, and the amount of grafted copolymer is from 95 to 20% by weight;

b) 94.5-20% by weight of a polyamide, and

c) 0.5-60% by weight of a compatibilizing copolymer comprising a copolymerized, functionalized monomer capable of reacting with the polyamide, in which the functionalized monomer concentration ranges from 0.05 to 4% by moles with respect to the copolymer.

The thus obtained compositions show very favourable impact-resistance values and a good thermo-resistance; however, the stiffness of these compositions is very poor. For this reason the above compositions cannot be used in those technological sectors where this property is a decisive factor.

Furthermore, the use of a vinyl-aromatic monomer-functionalized monomer copolymer, such as, for example, styrene-maleic anhydride copolymer, as compatilizing copolymer, does not allow to achieve a sufficient compatibilization of the grafted composition with the polyamide, at least when used in the proportions given above.

It has now been found that the drawbacks mentioned above can be eliminated by adjusting the weight percentage of the monomer having the functional group reactive with the polyamide resin which is present in the compatibilizing polymer in a manner such that said percentage is substantially equal to that of the ethylenically unsaturated nitrile of the vinyl-aromatic monomer-ethylenically unsaturated nitrile copolymer.

The blends thus obtained, in fact, exhibit a combination of properties which make them suitable for use in all those fields where satisfactory thermo-resistance and stiffness in combination with a good impact-resistance are required.

The subject matter of the present invention is, therefore, a thermoplastic composition having an advantageous balance of mechanical, thermal and stiffness properties, comprising:

(A) an impact-resistant vinyl-aromatic copolymer comprising avinyl-aromaticmonomer and an ethylenically unsaturated nitrile in a weight ratio of from 90:10 to 50:50, the monomers having been polymerized in the presence of and grafted onto a rubber substrate (backbone) having a glass transition temperature (Tg) lower than $0^\circ$ C;

(B) a polyamide resin in an amount such that the weight ratio of impact-resistant vinyl-aromatic copolymer (A) and polyamide resin is from 80:20 to 20:80; and

(C) from 1 to 50% by weight, with respect to the blend of impact-resistant vinyl-aromatic copolymer (A) and polyamide resin (B), of a compatibilizing copolymer containing a functionalized, copolymerized

monomer capable of reacting with the polyamide, the concentration of said functionalized monomer ranging from 10 to 50% by weight of the copolymer and being substantially equal to that of the ethylenically unsaturated nitrile contained in the vinyl-aromatic monomer-ethylenically unsaturated nitrile copolymer (A).

The term "substantially equal", whenever used in the present specification and in the claims, means that the functionalized monomer concentration is perfectly equal to that of the ethylenically unsaturated nitrile of the vinyl aromatic-ethyleni cally unsaturated nitrile copolymer or differs from the latter, the difference being within a range of from +10% to -10% of said functionalized monomer concentration.

The weight ratio vinyl-aromatic copolymer/polyamide resin (A/B) is preferably from 70:30 to 30:70 and the amount of compatilizing copolymer (C) ranges preferably from 5 to 45% by weight with respect to the blend (A)+(B).

Component (A) of the thermoplastic composition of the present invention may, e.g., be an impact-resistant vinyl-aromatic copolymer containing from 15 to 50% by weight of a rubber substrate having a Tg lower than 0 °C and from 85 to 50% by weight of a vinyl-aromatic monomer-ethylenically unsaturated nitrile copolymer wherein the weight ratio monomer/nitrile ranges from 90:10 to 50:50.

Preferably, the impact-resistant vinyl-aromatic copolymer contains from 20 to 40% by weight of a rubber substrate having a Tg lower than 0 °C and from 80 to 60% by weight of the copolymer composed of vinyl-aromatic monomer and ethylenically unsaturated nitrile units in a weight ratio of from 80:20 to 60:40.

The rubber substrate having a Tg lower than 0 °C, which is the backbone onto which the ethylenically unsaturated nitrile and the vinyl-aromatic monomer are partly grafted and partly mechanically adhered to in the form of an ethylenically unsaturated nitrile-vinyl-aromatic monomer copolymer, can, e.g., be an olefinic copolymer,having a Mooney viscosity (ML-4) at 100 °C of from 10 to 150, composed of at least two different linear alpha mono-olefins (preferably having 2 to 8 carbon atoms), such as ethylene, propylene, butene-1, octene-1 and the like, with at least one other copolymerizable monomer, generally a polyene and typically an unconjugated diene. Preferably one of the alpha mono-olefins is ethylene. The weight ratio of ethylene with respect to the at least one other alpha mono-olefin in the rubber copolymer is usually in the range of from 20/80 to 80/20. Particularly preferred copolymers are ethylene-propylene-unconjugated diene terpolymers in which the unconjugated diene can be cyclic or acyclic, such as 5-methylene-2-norbornene, 5-ethylidene-2-norbornene, 5-isopropylene-2-norbornene, pentadiene-1,4, hexadiene-1,4, hexadiene-1,5, heptadiene-1,5, dodecatriene-1,7,9, methyl-heptadiene-1,5, norbornadiene-2,5, cyclo-octadiene-1,5, didicyclopentadiene, tetrahydroindene, 5-methyl-tetra-hydroindene etc. The diene content of the rubber terpolymer preferably ranges from 5 to 20% by weight, and particularly from 8 to 18% by weight of dienic monomer units.

Particularly favorable results may be obtained by using a rubber terpolymer having a Mooney viscosity (ML-4), measured at 100 °C, of from 30 to 90 and an iodine number above 5, preferably of from 10 to 40.

Alternatively, the rubber substrate may, for instance, be a diene rubber such as polybutadiene, polymers of butadiene with a co-monomer such as styrene and/or acrylonitrile, containing at least 50%, and preferably at least 80% by weight of butadiene, or a block polymer based on butadiene or a radial block rubber.

The term "styrene monomer", whenever used in the present specification and in the claims, preferably denotes ethylenically unsaturated compounds having the general formula (I):

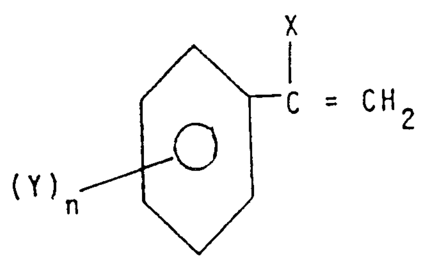

(I)

wherein:

- X represents hydrogen or an alkyl group having 1 to 4 carbon atoms (particularly methyl);
- Y represents halogen (F, Cl, Br or I, particularly Cl) or an alkyl group having 1 to 4 carbon atoms (e.g., methyl or ethyl); and
- n is 0 or an integer of from 1 to 5.

For n ≥ 2, the groups Y are the same or different, preferably the same.

Examples of vinyl-aromatic monomers of the above general formula are styrene; methyl-styrene; mono-, di-, tri-, tetra- and penta-chloro-styrene and the corresponding alpha-methyl-styrenes; nucleus-alkylated styrenes and the corresponding alpha-methyl-styrenes such as ortho- and para-methyl-styrenes; ortho-and para-ethyl-styrenes; ortho- and para-methyl-styrenes, etc.

These monomers can be utilized individually or in admixture with one another.

The term "ethylenically unsaturated nitrile" denotes in the first place and preferably acrylonitrile, although other acrylic monomers such as methacrylonitrile, acrylic acid, methacrylic acid and alkyl $C_1$-$C_4$ esters of acrylic acid and methacrylic acid can also be used.

Examples of copolymerization methods for preparing the impact-resistant styrene copolymers (A) utilized in the composition of the present invention are described in IT-B-792,269 and US-A-3,819,765; 3,489,822; 3,642,950 and 3,849,518.

It is to be understood that in the grafting copolymerization not the whole resin-forming monomer is grafted onto the rubber backbone; a part of the monomer forms a free resin, which is present in physical mixture with the grafted copolymer. The amount of grafted monomer in the copolymer can be determined by extracting the product with a solvent of the non-grafted resin.

Component (A) is typically an AES resin, i.e., is composed of an EPDM rubber onto which the styrene-acrylonitrile copolymer (SAN) is partly grafted and partly mechanically adhered; or is an ABS or MBS resin, i.e., is composed of a dienic rubber backbone onto which a vinyl-aromatic monomer and acrylonitrile or methacrylonitrile have been grafted.

The polyamide resins (component B) which are suitable of the compositions of the present invention are the conventional ones, injection moldable, generally known as nylon resins, including the aliphatic polylactams prepared by opening the lactam ring and the polyamides produced by polycondensation of an aliphatic diamine (containing from 4 to 14 carbon atoms) with an aliphatic dicarboxylic acid (containing from 4 to 12 carbon atoms).

Examples of suitable polyamide resins include nylon 4; nylon 6; nylon 7; nylon 11; nylon 12; nylon 6,6; nylon 6,9; nylon 6,10 and nylon 6,12. Partly aromatic nylons can also be used as component (B) in the compositions of the present invention. The term "partly aromatic nylons" denotes those nylons which have been obtained by partial or complete substitution of an aliphatic residue of an aliphatic nylon by an aromatic residue.

For example, the residues of adipic acid in nylon 6,6 can be substituted by terephthalic or isophthalic acid residues or by mixtures thereof; similarly, some amine residues may be of aromatic nature.

Preferred polyamide resins are nylon 6, nylon 6,6 or random copolymers of nylon 6 and nylon 6,6.

The average molecular weight of the polyamide resins is advantageously greater than about 10,000 and preferably greater than about 15,000, the melting point thereof being preferably greater than 200 °C.

Component (C), used to make the impact-resistant vinyl-aromatic copolymer (A) compatible with the polyamide resin (B), is a copolymer of at least one vinyl-aromatic monomer, preferably of the type used in component (A), copolymerized with at least one comonomer having a functional group reactive with the amine or the carboxylic acid group of the polyamide. The concentration of the comonomer having the functional group ranges from 10 to 50% by weight with respect to the copolymer, preferably from 15 to 35%, and is substantially equal to the concentration of the ethylenically unsaturated nitrile copolymerized in the vinyl-aromatic monomer-ethylenically unsaturated nitrile copolymer (A).

The comonomer having the functional group is preferably selected from acrylic acid, methacrylic acid; dicarboxylic acids such as fumaric acid, maleic acid, itaconic acid, aconitic acid, citraconic acid, etc. and the corresponding anhydrides; and epoxides such as glycidyl acrylate, glycidyl methacrylate, allyl-glycidyl ether, etc.

The average molecular weight of copolymers (C) is generally greater than about 20,000 and preferably of from about 40,000 to about 200,000.

The preferred component (C) is a copolymer consisting of styrene and from 15 to 35% by weight of maleic anhydride, as well as optionally alpha methyl-styrene.

The blends of the present invention can be prepared by hot mixing in any known mixing unit, such as single or double screw extruders, Banbury mixers, mixing rollers etc., prefer ably at a temperature of from 200 to 300 °C. The compositions may additionally contain additives, such as stabilizing agents, UV stabilizers, plasticizers, lubricants, flame retardants, flow modifiers, antistatic agents, dyes, pigments, glass fibres or other inorganic fillers etc. in order to impart particular characteristics to the material.

The blends of the present invention are easily processable and show a combination of properties that make them suitable for use in the preparation of articles having a high impact and thermal resistance, combined with good stiffness and reduced water sensitivity.

These blends find application in the field of motor transportation, for the production of pieces that can

be coated in a heated oven, of parts that come into contact with the motor. electric household appliances. electronics and technical articles in general, e.g. in the form of cups. boxes. containers. panels. sheets. rods, etc.

Moreover, the high stiffness of the blends of the present invention makes them particularly suitable for the production of toothed gears, fans, bristles etc.

The blends can also be used to produce foamed articles, using known techniques.

The following non-limitative examples are given to illustrate the present invention.

In the examples all parts and percentages are expressed by weight, unless otherwise indicated.

Examples 1 to 5

Blends consisting of:

(A) a highly impact-resistant styrene copolymer (AES) containing 28% by weight of EPDM rubber having a Mooney visco sity (ML-4) at 100°C of 62-72 and a iodine number of 18, and 72% by weight of a styrene-acrylonitrile copolymer having a weight ratio styrene/acrylonitrile of 76/24;

(B) Nylon 6 (TERNIL ® B 27 by Montedipe), having an average molecular weight of 18,000;

(C) a compatibilizing copolymer containing 24% by weight of maleic anhydride and 76% by weight of styrene and having a weight average molecular weight (Mw) of 160,000,

were extruded by means of a double screw extruder (Baker-Perkins MPC V30) with degasing and at a temperature of 220 to 290°C.

The weight ratios of the components of the blends are reported in Table I.

By cutting the strands coming out of the extruder, granules were obtained which were dried for 2 to 4 hours at 80 to 90°C.

In order to evaluate the mechanical and thermal properties, the granules were injection molded at a temperature of 220 to 240°C on a Negri e Bossi V17 press to obtain test pieces having the dimensions required by the ASTM standards.

The measured characteristics and the methods employed were as follows:

Mechanical properties

The elastic modulus was determined according to ASTM D638, the IZOD impact strength with notch was measured at 23°C according to ASTM D256, on test pieces having a thickness of 3.2 mm.

Thermal properties

The VICAT softening temperatures, at 1 kg and at 5 kg in oil, were determined according to ISO 306.

The measured properties are reported in the following Table I.

TABLE I

| COMPOSITIONS | | EXAMPLES 1 | 2 | 3 | 4 | 5 |
|---|---|---|---|---|---|---|
| A) Impact resistant styrene copolymer (AES) (wt.%) | | 24 | 65 | 47 | 42.5 | 35 |
| B) Nylon 6 (wt.%) | | 71 | 30 | 46 | 42.5 | 35 |
| C) Compatibilizing copolymer (wt.%) | | 5 | 5 | 7 | 15 | 30 |
| PROPERTIES | UNITS | | | | | |
| IZOD | J/m | 60 | 150 | 130 | 105 | 50 |
| Elastic modu= lus | $N/mm^2$ | 1600 | 2000 | 2100 | 2150 | 2350 |
| VICAT at 1 kg | °C | 190 | 114 | 180 | 165 | 130 |
| VICAT at 5 kg | °C | 124 | 104 | 114 | 110 | 107 |

Example 6 (Comparative example)

A blend was prepared by using the same operative conditions as in example 1. Said blend was composed of:

(A) 47% by weight of an impact resistant styrene copolymer (AES) containing 28% by weight of EPDM rubber having a Mooney viscosity (ML-4) at 100° C of 62-72 and an iodine number of 18, and 72% by weight of a styrene-acrylonitrile copolymer (weight ratio 82/18);

(B) 46% by weight of Nylon 6 of example 1; and

(C) 7% by weight of the compatibilizing copolymer of example 1.

The properties of the blend are listed in the following Table II.

Example 7 (Comparative example)

A blend was prepared by using the same operative conditions as in example 1. Said blend was composed of:

(A) 47% by weight of an impact-resistant styrene copolymer (AES) containing 28% by weight of EPDM rubber having a Mooney viscosity (ML-4) at 100° C of 62-72 and an iodine number of 18, and 72% by weight of a styrene-acrylonitrile copolymer (weight ratio 69/31);

(B) 46% by weight of Nylon 6 of example 1; and

(C) 7% by weight of the compatibilizing copolymer of example 1.
The properties of the blend are listed in the following Table II.

Example 8 (Comparative example)

A blend was prepared by using the operative conditions of example 1. Said blend was composed of:
(A) 47.5% by weight of the impact resistant styrene copolymer (AES) of example 1;
(B) 47.5% by weight of Nylon 6 of example 1;
(C) 5% by weight of a compatibilizing copolymer containing 4% by weight of maleic anhydride and 96% by weight of styrene, and having a weight average molecular weight (Mw) of 200,000.
The properties of the blend are listed in the following Table II.

TABLE II

| PROPERTIES | UNITS | EXAMPLES | | |
|---|---|---|---|---|
| | | 6 | 7 | 8 |
| IZOD | J/m | 52 | 50 | delamination |
| Elastic modulus | $N/mm^2$ | 2000 | 1950 | |
| VICAT at 1 kg | °C | 180 | 180 | |
| VICAT at 5 kg | °C | 113 | 112 | |

**Claims**

1. Thermoplastic compositions having improved mechanical properties, stiffness and thermo-resistance, comprising a blend of:
(A) an impact-resistant vinyl-aromatic copolymer comprising units derived from avinyl-aromatic monomer and an ethylenically unsaturated nitrile in a weight ratio of from 90:10 to 50:50, the monomers having been polymerized in the presence of and grafted onto a rubber substrate (backbone) having a glass transition temperature (Tg) lower than 0° C;
(B) a polyamide resin in an amount such that the weight ratio of impact-resistant vinyl-aromatic copolymer (A) to poly-amide resin is from 80:20 to 20:80; and
(C) from 1 to 50% by weight, with respect to the blend of impact-resistant vinyl-aromatic copolymer (A) and polyamide resin (B), of a compatibilizing copolymer containing a functionalized, copolymerized monomer capable of reacting with the polyamide, the concentration of said functionalized monomer ranging from 10 to 50% by weight of the copolymer and being substantially equal to that of the ethylenically unsaturated nitrile contained in the vinyl-aromatic monomer-ethylenically unsaturated nitrile copolymer (A).

2. Compositions according to claim 1, wherein the concentration of the functionalized monomer in copolymer (C) is equal to that of the ethylenically unsaturated nitrile copolymerized in the vinyl-aromatic monomer-ethylenically unsaturated nitrile copolymer or differs from the latter by at most ± 10%.

3. Compositions according to any one of claims 1 and 2, wherein the weight ratio vinyl-aromatic copolymer/ polyamide resin (A/B) ranges from 70:30 to 30:70 and the amount of compatibilizing copolymer (C) is from 5 to 45% by weight with respect to the blend of (A) + (B).

4. Compositions according to any one of the preceding claims, wherein the impact-resistant vinyl-aromatic copolymer (A) contains from 15 to 50%, preferably 20 to 40% by weight of a rubber substrate having a Tg lower than 0°C and from 85 to 50% by weight of a vinyl-aromatic monomer-ethylenically unsaturated nitrile copolymer wherein the weight ratio of said monomers ranges from 90:10 to 50:50, particularly from 80:20 to 60:40.

5. Compositions according to any one of the preceding claims, wherein the rubber substrate having a Tg lower than 0°C is an olefinic copolymer, having a Mooney viscosity (ML-4) at 100°C of from 10 to 150, of at least two different linear alpha mono-olefins with at least one other copolymerizable polyene monomer, preferably an unconjugated diene.

6. Compositions according to claim 5, wherein one alpha mono-olefin is ethylene and the weight ratio of ethylene to the at least one other alpha mono-olefin ranges from 20/80 to 80/20.

7. Compositions according to any one of claims 5 and 6, wherein the olefinic copolymer is an ethylene-propylene-unconjugated diene terpolymer, wherein the diene content ranges from 5 to 20% by weight, and preferably from 8 to 18%, with respect to the terpolymer.

8. Compositions according to claim 7, wherein the terpolymer has a Mooney viscosity (ML-4) at 100°C of from 30 to 90 and an iodine number above 5 and preferably of from 10 to 40.

9. Compositions according to any one of claims 1 to 4, wherein the rubber substrate having a Tg lower than 0°C is a diene rubber.

10. Compositions according to any one of the preceding claims, wherein the vinyl-aromatic monomer has the general formula (I):

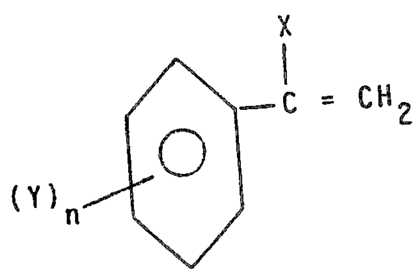

(I)

wherein:

X represents hydrogen or an alkyl group having from 1 to 4 carbon atoms;
Y represents halogen or an alkyl radical having from 1 to 4 carbon atoms; and
n is 0 or an integer of from 1 to 5.

11. Compositions according to any one of the preceding claims, wherein the ethylenically unsaturated nitrile is acrylonitrile.

12. Compositions according to any one of the preceding claims, wherein the polyamide resin (B) is nylon 6 or nylon 6,6.

13. Compositions according to any one of the preceding claims, wherein the compatibilizing copolymer (C) comprises a vinyl-aromatic monomer, of the kind used in component (A), copolymerized with a comonomer containing a functional group which is reactive with the amine or with the carboxylic acid group of the polyamide (B).

**14.** Compositions according to any one of the preceding claims, wherein the comonomer containing the functional group is selected from acrylic acid, methacrylic acid, dicarboxylic acids and the corresponding anhydrides, and mixtures thereof.

**15.** Compositions according to any one of the preceding claims, wherein the compatibilizing copolymer (C) contains from 15 to 35% by weight of the comonomer containing the functional group.

**16.** Compositions according to any one of the preceding claims, wherein the compatibilizing copolymer (C) has an average molecular weight higher than about 20,000 and preferably from about 40,000 to about 200,000.

**17.** Compositions according to any one of the preceding claims, wherein the compatibilizing copolymer (C) is a copolymer containing styrene and from 15 to 35% by weight of maleic anhydride.

**18.** Compositions according to any one of the preceding claims, additionally containing additives selected from stabilizing agents, UV stabilizers, plasticizers, lubricants, flame retardants, flow modifiers, antistatic agents, dyes, pigments, glass fibres and/or other inorganic fillers and mixtures thereof.

**19.** Shaped articles, produced from a composition according to any one of claims 1 to 18.

European Patent Office

# EUROPEAN SEARCH REPORT

Application Number

EP 90 12 3950

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-319056 (STAMICARBON B.V.)<br>* page 4, lines 28 - 29; claims 1-5, 7 *<br>--- | 1-19 | C08L77/00//<br>(L77/00; L51:04<br>; L57:10) |
| A,D | EP-A-202214 (MONSANTO COMPANY)<br>* claims 1-24 *<br>----- | 1-19 | C08L77/00//<br>(L77/00; L55:02<br>L57:10)<br>C08L51/04//<br>(L51/04; L77:00<br>; L57:10)<br>C08L55/02//<br>(L55/02; L77:00<br>; L57:10) |

TECHNICAL FIELDS SEARCHED (Int. Cl.5 )

C08L

The present search report has been drawn up for all claims

| Place of search | Date of completion of the search | Examiner |
|---|---|---|
| THE HAGUE | 18 MARCH 1991 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)